Europäisches Patentamt

(19) European Patent Office

Office européen des brevets

(11) Publication number : **0 136 327**
**B1**

(12) # EUROPEAN PATENT SPECIFICATION

(45) Date of publication of patent specification :
19.08.87

(21) Application number : 84901002.0

(22) Date of filing : 24.02.84

(86) International application number :
PCT/HU 84/00012

(87) International publication number :
WO/8403202 (30.08.84 Gazette 84/21)

(51) Int. Cl.⁴ : **A 23 J 1/06**, A 23 J 3/00,
A 23 K 1/04

(54) **PROCESS FOR THE PREPARATION OF PROTEIN COMPOSITIONS FOR USE IN FOOD INDUSTRY.**

(30) Priority : 24.02.83 HU 63783

(43) Date of publication of application :
10.04.85 Bulletin 85/15

(45) Publication of the grant of the patent :
19.08.87 Bulletin 87/34

(84) Designated contracting states :
AT CH DE FR GB LI SE

(56) References cited :
DE-A- 2 637 362
DE-A- 2 831 338
DE-A- 2 842 918
GB-A- 2 018 121
The file contains technical information submitted after the application was filed and not included in this specification

(73) Proprietor : Központi Eleimiszeripari Kutato Intézet
15 Herman Otto ut.
H-Budapest II (HU)

ZALA MEGYEI ALLATFORGALMI ES HUSIPARI VAL-
LALAT
Vágohid
H-Zalaegerszeg (HU)

(72) Inventor : HALASZ, Anna
6, Berend u.
H-1035 Budapest (HU)
Inventor : MIETSCH, Frank
14, Hevesi Gy. u.
H-1156 Budapest (HU)
Inventor : FEHER, József
19, Gidòfalvi u.
H-1134 Budapest (HU)
Inventor : SZALMA, Ilona née PFEIFFER
5, Karithy F. u.
H-1117 Budapest (HU)
Inventor : GRESKOVITS, Endre
29, Keleti K. u.
H-1024 Budapest (HU)
Inventor : FARKAS, Imre
2/a, Alsòerdei ut
H-8900 Zalaegerszeg (HU)
Inventor : FAL, Imre
20, Berzsenyi u.
H-8900 Zalaegerszeg (HU)
Inventor : ILLES, Imre
29, Bartòk B. ut.
H-8900 Zalaegerszeg (HU)

(74) Representative : **Hansen, Bernd, Dr.rer.nat. et al Hoffmann, Eitle & Partner Patentanwälte Arabellastrasse 4 D-8000 München 81 (DE)**

## Description

This invention relates to a process for the preparation of protein compositions for use in food industry from food grade blood.

In DE-A-2, 831, 338 a process is described for the utilization of slaughter-house blood as human food or animal feed by working-up the blood. Globin-protein and haemin-protein which are the main components of haemoglobin are separated on processing blood. The said separation is to be carried out under mild conditions in order to avoid the damages of globin protein. According to the above cited document specific proteolytic enzymes are used for this purpose and by this measure attempts are made to obtain protein being free of bitter taste. Specific proteolytic enzymes exhibit their effect in acidic medium and therefore particularly enzymes derived from the Rhozopus rhizbodiformi and Aspergillus niger strains are used. According to our experiments the use of the above enzymes has the drawback that valuable globin protein material is decomposed as well and it is very difficult to control enzymatic decomposition in such a manner that the protein should be devoid of bitter taste.

GB-A-2, 018, 121 discloses a method for processing blood for addition to a food product wherein a haemolized red blood corpuscle fraction is partly hydrolyzed by a proteolytic enzyme at pH 7 to 10 to a degree of hydrolysis of at least 10. Thereafter the enzyme is inactivated, and the supernatant is purified.

It is the object of the present invention to provide a process for the preparation of protein compositions suitable for use in food industry from food grade animal blood - particularly from slaughter-house blood - whereby the protein composition obtained meets the requirements of food industry, has a biological value higher than that of protein compositions prepared by conventional methods since the decomposition of protein can be eliminated. It is a further object of the present invention to provide protein compositions which can be directly worked-up in the meat industry and possess a suitable foaming capacity, emulsifying activity and a proper taste and colour.

The protein composition according to the present invention obtainable from blood by haemolysis, subsequent alkaline oxidization and proteolysis carried out in alkaline or neutral medium possesses the following characteristic features (related to dry substance) :

minimum protein content : 80 %
maximum haemin content : 1.2 mg haemin/g
maximum free amino acid content : 20 %
maximum ash content : 10 %
colour : (according to lightness coefficient of the CIE system : Y = at least 27.13)
it should be completely soluble in water
on heating (at a temperature of about 100 °C) it must coagulate by at least 10-15 %
foaming capacity : 400-500 %
emulsifying activity : 50-55 %

protein biological value : at least 68.7 (MORUP-OLESEN index)
NPU % = at least 17.1

The preferred characteristic data of the product prepared according to the process of the present invention are as follows :

protein content : 82-84 %
haemin content : 0.05-0.8 mg haemin/g
lysine content of the total amino acid content : at least 7 %
methionine content : at least 0.8 %
glutaminic acid content : at least 4.5 %
ash content : 7-8.5 %.

On using the composition as food additive it causes no change of colour or taste.

According to the present invention there is provided a process for the preparation of protein composition suitable for use in food industry from food grade blood by haemolysis and enzymatic decomposition which comprises subjecting blood haemolyzed by known methods to denaturalization in alkaline medium at a pH value between 10 and 11, oxidizing the denaturalized haemoglobin in the presence of molecular oxygen, treating the product after oxidation with a proteolytic enzyme functionating in alkaline or neutral medium at a rate of 0.006-0.05 Au/g protein and an enzyme-substrate ratio of 1 : 100-1 : 20, adjusting the pH of the medium after enzymatic decomposition to a value between 4.0 and 5.2 and separating the haemin from the solution having a protein content of 4-16 %, terminating the enzymatic activity of the protein solution by thermal treatment and if desired dehydrating the protein solution under mild conditions.

Haemolysis is carried out in a known manner by osmotic methods, in a 1 : 3-1 : 2 diluted aqueous solution, or by ultrasonic methods or under an overpressure of 200-300 atm. Oxidation is accomplished in alkaline medium for 10-120 minutes, under stirring, if desired under additional air-blast. The enzymatic decomposition of the haemolysed product is performed in alkaline or neutral medium, at a temperature of 30-70 °C, for 30-480 minutes. As proteolytic enzyme in the process of the present invention enzymes functionating in alkaline or neutral medium can be used which prefer to cleave the chain at the histidine, leucine, glycine and phenylalanine bonds. The alkalinity of the medium can be adjusted with sodium hydroxide. The protein solution thus obtained being separated from haemin can be directly utilized or if necessary subjected to spray-drying, lyophylization or freezing. After enzymatic treatment the proteolytic activity of the treated product is adjusted to 0 Anson unit. Haemin can be separated from the protein solution in a known manner by separation, centrifuging or filtration. The yield of the process amounts to 60-70 % - related to thick blood (haemoglobin).

According to the process of the present invention it is preferred to use Alcalase 0.6 L (Novo Industri, Denmark), alfa-Kimotripsin (Merck), Corolase PS (Rohm) or Termitase (Rohm) as proteolytic enzyme.

It has been found that if blood cells are denaturalized by haemolysis in alkaline medium, denaturalized haemoglobin is oxidized with molecular oxygen and thereafter haemin is selectively separated from globin-protein by means of a proteolytic enzyme active in alkaline or neutral medium, then the biological value of globin-protein is maintained, its decomposition degree is reduced to a minimal value and a colourless product free from bitter taste is obtained. Oxidation of haemoglobin in alkaline medium promotes the activity of the proteolytic enzyme and the use of enzyme fucntioning exclusively in neutral or alkaline medium gives optimal results.

Industrial applicability

The invention provides a process for the preparation of protein compositions suitable for use in food industry from food grave blood. The advantages of the invention are that the process is readily feasible and easy to control on industrial scale too, it can be accomplished by using a simple technology, the risks of formation of waste product of inferior quality are low because the process is well reproducible under the given parameters. A slaughter-house blood particularly blood of swine, cattle, horses or sheeps can be used.

Modes of carrying out the invention

Further details of the process of present invention are to be found in the Examples without limiting the scope of protection to the said Examples.

The analysis of the protein obtained is carried out by the following methods :

Determination of protein content : Kjeldahl method (a semi-automatic Kiel-Foss apparatus).

Determination of lysine and glutamic acid content : LABOR MIM and AMINOCHROM type automatic aminoacid analyser.

Determination of methionine content : Barton-Wright : The microbiological assay of the essential amino-acids in compound feeding stuffs, Analyst, 97, 138-141.

Determination of free amino acid content : by using a tin chloride/ninhydrine reagent, related to the L-lysine standard, the NPU value is

$$(B - B_k)/l \times 100$$

wherein

B is the nitrogen content of the animal fed with the test-protein ;

$B_K$ is the nitrogen content of the control animal

l is the total nitrogen consumption of the feed taken up.

Determination of ash content : in platinum crucible, heated to 650 °C.

Determination of colour : Official Recommendations of Uniform Color Spaces Color-Difference Equations, Metric Color Terms. May 1976 - Supplement No. 2. to CIE Publication No. 15, Colorimetry (E-1. 3.1) 1971, page 19.

Determination of haemin content : Gy. Gantner : Acidic-acetonous separation of haem (Husipar 7, 159) dimension : mg of haemin/g.

Determination of emulsion activity : K. Yasumatsu et al : Agric. Biol. Chem. 36, 719 (1972).

Determination of foaming capacity : R.C. Gunter : Chemistry and Characteristics of Enzyme modified Whipping Proteins : J. Am. Oil. Chemist's Soc. March 1979 (V. 56). MORUP OLESEN index : 10th Int. Cong. Nutr. Abstr. 100, 1235 (Kyoto 1975).

Example 1

To 25 ml of thick blood 75 ml of water are added and the pH is adjusted to 10.5 by adding a 5 N sodium hydroxide solution. Thick blood is prepared from full complete blood taken with a tubular knife, stabilized with sodium acetate or phosphate and the plasma (blood serum) is separated by centrifuging or separation. Thick blood being diluted with water and adjusted to the suitable pH value is stirred for 120 minutes by using a magnetic stirrer and contacted with air. Under the effect of the alkaline pH and molecular oxygen the protein is denaturalized and the haemoglobin is oxidized.

To 100 ml of haemoglobin solution 0.160 AU Alcalase 0.6 L enzyme are added at an enzyme-substrate ratio of 1 : 32 and the solution is stirred for 420 minutes. The pH is adjusted to the value of 4.5 by adding concentrated hydrochloric acid. The solution is filled into centrifuge tubes and sedimentated for 30 minutes at 3 000 r.p.m. The substance containing haemin is settled. The supernatant is subjected to thermal treatment at 85 °C for 10 minutes and lyophylized. The characteristic data of the lyophylized product are as follows :

    protein content : 80 %
    residual haemin content : 0.65 mg/g
    CIE lightness factor : Y = 30.4
    ash content : 8 %
    free amino acid content : 10 %

Example 2

25 ml of thick blood prepared accoding to Example 1 are diluted with 175 ml of water and adjusted with 5 N sodium hydroxide solution to pH 10.5. The solution comprising blood cells haemolysed according to Example 1 is heated to 55 °C and to each 100 ml of the solution 0.024 AU enzyme (Alcalase 0.6 L) are added at an enzyme-substrate ratio of 1 : 100. Enzymatical decomposition is carried out for 480 minutes whereupon the solution is adjusted with concentrated hydrochloric acid to the pH value of 4 and centrifuged at 3 000 r.p.m. for 30 minutes. The globin solution separated from the haemin is allowed to stand at 85 °C for 10 minutes. After in-activation of the enzyme and lyophylization 2.5 g of a powder are obtained, the characteristic data there being as follows :
protein content : 88.5 %
ash content : 7 %
residual haemin content : 0.63 mg/g
lightness coefficient Y = 30.4
free amino acid 15 %.

Example 3

25 ml of thick blood prepared according to Example 1 are diluted with 75 ml of water whereupon the pH is adjusted to 10.5 by adding 5 N sodium hydroxide solution. The solution is stirred for 60 minutes with a magnetic stirrer, heated to 85 °C, whereupon a protease enzyme having an activation of 0.40 AU is added and stirred for 60 minutes. After enzymatic decomposition the pH is adjusted to 5 by adding concentrated hydrochloric acid and the mixture is centrifuged for 30 minutes at 3 000 r.p.m. From the sedimentated haemin the supernatant is decanted off and the solution is kept at 85 °C for 10 minutes in order to deactivate the enzyme. After lyophylization 5.52 g of a product are obtained, having the following characteristic features :
protein content : 84 %
ash content 8 %
residual haemin : 0.32 mg/g
lightness coefficient : Y = 31
free amino acid : 20 %.

Example 4

To 25 ml of thick blood obtained according to Example 175 ml of water are added and it is subjected to haemolysis. After haemolysis the solution is heated to 55 °C and an Alcalase 0.6 L enzyme having an activity of 0.28 AU is added at an enzyme-substrate ratio of 1 : 20. The mixture is stirred for 60 minutes. After enzymatic treatment the pH is adjusted to 5.5 by adding concentrated hydrochloric acid and the solution is centrifuged at 3 000 r.p.m. for 30 minutes. The protein solution separated from the haemin is deactivated at 85 °C for 10 minutes and lyophylized. Thus 5 g of a product are obtained having the following characteristic data :
protein content : 82 %
ash content : 8.5 %
residual haemin : 1.15 mg/g
lightness coefficient : Y = 27.3
free amino acid : 18 %

Example 5

25 ml of thick blood obtained according to Example 1 are diluted with 75 ml of water and the solution is denaturated for 120 minutes. To 100 ml of the haemoglobin solution thus obtained alfa-Kimoptrisin (Merck) having an activity of 0.4 AU are added at an enzyme-substrate ratio of 1 : 40 and the system is stirred for 240 minutes. After enzymatic treatment the pH is adjusted to 4.5 by adding concentrated hydrochloric acid and the mixture is centrifuged at 3 000 r.p.m. for 30 minutes. The protein solution separated from the haemin is kept at 85 °C for 10 minutes. The powdery product obtained after lyophylization weighs 4.8 g and has following characteristic data :
protein content : 80 %
residual haemin : 1.2 mg/g
CIE lightness coefficient : Y = 27.0
ash content : 10 %
free amino acid content : 18 %

Example 6

Thick blood obtained according to Example 1 is diluted with water in a ratio of 13 and denaturated in alkaline medium for 120 minutes. Denaturalization is carried out under introduction of air. The denaturated haemoglobin is heated to 30 °C, adjusted to the pH value of 5.0 and 0 Corolase PS (Rohm) enzyme having an activity of 0.40 AU is added at an enzyme-substrate ratio of 1 : 40. The mixture is subjected to thermal treated for 480 minutes and acidified to the pH value of 4.0 with concentrated hydrochloric acid. The mixture is centrifuged in acidic medium at 3 000 r.p.m. for 30 minutes. The globin solution is separated from the settled haemin and kept at 65 °C for 10 minutes in order to deactivate the enzyme. The inactivated solution is subjected to lyophylization. 5.4 g of a light beige powder are obtained having the following characteristic data :
protein content : 82 %
ash content : 6 %
residual haemin : 0.78 mg/g
lightness coefficient : Y = 29.5
free amino acid content : 15 %

Example 7

25 ml of thick blood obtained according to Example 1 are diluted with water at a ratio of 1 : 1 whereupon the pH is adjusted to 10.5 by adding a 5 N sodium hydroxide solution. The solution is stirred for 120 minutes with a magnetic stirrer, thereafter heated to 55 °C and a Thermitase enzyme having an activity of 0.4 AU are added at an enzyme-substrate ratio of 1 : 40 and at a pH value of 6.8. Enzymatic treatment is carried out for 120 minutes, the pH is adjusted to the value of 4.0 by adding concentrated hydrochloric acid and the system is centrifuged at 3 000 r.p.m. for 30 minutes. The supernatant is decanted off the sedimented haemin and the enzyme is deactivated at 85 °C for 15 minutes. The inactivated solution is subjected to lyophylization. Thus 5 g of a product are obtained having the following characteristic data :
protein content : 80 %
residual haemin : 0.88 mg/g
lightness coefficient : Y = 28.8
free amino acid : 16 %.

## Claims

1. Process for the preparation of a protein composition for food industry starting from food grade blood obtained by haemolysis and enzymatic decomposition at alkaline pH, which comprises

denaturating blood haemolysed in a known manner in alkaline medium at a pH value between 10 and 11,

oxidizing denaturated haemoglobin in the presence of molecular oxygen,

decomposing the product obtained after oxidation with a proteolytic enzyme capable of functioning in alkaline or neutral medium at an enzyme-substrate ratio of 1 : 100-1 : 20,

adjusting the pH of the medium after enzymatic decomposition to a pH value between 4.0 and 5.2 and

separating the haemin from the solution containing the globin,

stopping enzymatic activity of the globin-protein solution by thermal treatment, and

if desired dehydrating the protein solution under mild conditions.

2. Process according to claim 1 which comprises carrying out denaturalization and oxidation in one step, under stirring, within 10-120 minutes, optionally under additional air-blasting.

3. Process according to claim 1 which comprises using enzymes which preferably cleave the histidine, leucine, glycine, phenylalanine or alanine bonds.

4. Process according to claim 1 which comprises subjecting the protein solution to freezing, lyophylization or spray-drying.

5. Protein composition for food industry obtainable according to any of claims 1 to 4, characterized by the following data (related to dry substance). :

minimum protein content : 80 % ;

maximum haemin content : 1.2 mg haemin/g ;

maximum free amino acid content : 20 % ;

of the toal amino acid content : lysine content : at least 7 % ; methionine content : at least 0.8 % ; glutaminic acid content : at least 4.5 % ; maximum ash content : 10 %;

colour (according to lightness coefficient of the CIE system) : Y = at least 27.13 ;

the product should be completely soluble in water ;

on heating (at a temperature of about 100 °C) the product coagulates by at least 10 to 15 % ;

foaming capacity : 400-500 % ;

emulsifying activity : 50-55 % ;

protein biological value :

MORUP-OLESEN index : at least 68.7

NPU value = at least 17.1 %.

ausgehend von Blut in Nahrungsmittelqualität, erhalten durch Hämolyse und enzymatischen Abbau bei alkalischem pH, gekennzeichnet durch

Denaturieren von hämolisiertem Blut in an sich bekannter Weise in einem alkalischen Medium bei einem pH-Wert zwischen 10 und 11,

Oxidieren von denaturiertem Hämoglobin in Gegenwart von molekularem Sauerstoff,

Abbau des nach Oxidation erhaltenen Produktes mit einem proteolytischen Enzym, das in alkalischem oder neutralem Medium bei einem Enzym-Substrat-Verhältnis von 1 : 100 bis 1 : 20 aktiv ist,

Einstellen des pH-Wertes des Mediums nach dem enzymatischen Abbau auf einen pH zwischen 4,0 und 5,2, und

Abtrennen von Hämin aus der globinhaltigen Lösung,

Stoppen der enzymatischen Aktivität der Globin-Protein-Lösung durch Wärmebehandlung, und

sofern dies gewünscht wird, Dehydratisieren der Proteinlösung unter milden Bedingungen.

2. Verfahren nach Anspruch 1, dadurch gekennzeichnet, dass die Denaturierung und Oxidation in einem Schritt unter Rühren innerhalb von 10 bis 120 Minuten, gegebenenfalls unter zusätzlichem Einblasen von Luft durchgeführt wird.

3. Verfahren nach Anspruch 1, dadurch gekennzeichnet, dass man Enzyme verwendet, die vorzugsweise die Histidin-, Leucin-, Glycin-, Phenyl-alanin- oder Alanin-Bindungen spalten.

4. Verfahren nach Anspruch 1, dadurch gekennzeichnet, dass man die Proteinlösung einfriert, lyophilisiert oder sprühtrocknet.

5. Proteinzusammensetzung für die Nahrungsmittelindustrie, erhältlich nach einem oder mehreren der Ansprüche 1 bis 4, gekennzeichnet durch die folgenden Daten (bezogen auf Trockensubstanz) :

Minimum-Proteingehalt : 80 % ;

Maximum-Hämingehalt : 1,2 mg Hämin/g ;

maximaler Gehalt freier Aminosäuren : 20 % ;

vom Gesamt-Aminosäuregehalt : Lysingehalt : mindestens 7 %; Methioningehalt : mindestens 0,8 %; Glutaminsäuregehalt : mindestens 4,5 % ;

maximaler Aschegehalt : 10 % ;

Farbe (gemäss Helligkeitskoeffizient des CIE-Systems) : Y = mindestens 27,13 ;

das Produkt sollte in Wasser vollständig löslich sein ;

beim Erwärmen (bei einer Temperatur von ca. 100 °C) koaguliert das Produkt zumindestens zu 10 bis 15 % ;

Schäumkapazität : 400 bis 500 % ;

emulgierende Wirkung : 50 bis 55 % ;

biologischer Proteinwert :

MORUP-OLESEN-Index : mindestens 68,7

NPU-Wert = mindestens 17,1 %.

## Patentansprüche

1. Verfahren zur Herstellung einer Proteinzusammensetzung für die Nahrungsmittelindustrie,

## Revendications

1. Procédé de préparation d'une composition protéique pour l'industrie alimentaire, à partir de sang de qualité alimentaire, obtenue par hémolyse et décomposition enzymatique à pH alcalin, qui comprend :

la dénaturation du sang hémolysé d'une manière connue, en milieu alcalin à un pH d'une valeur comprise entre 10 et 11,

l'oxydation de l'hémoglobine dénaturée en présence d'oxygène moléculaire,

la décomposition du produit obtenu après l'oxydation avec une enzyme protéolytique capable de fonctionner en milieu alcalin ou neutre en un rapport enzyme-substrat de 1 : 100-1 : 20,

l'ajustement du pH du milieu après la décomposition enzymatique à un pH d'une valeur comprise entre 4,0 et 5,2 et

la séparation de l'hémine de la solution contenant la globine,

l'arrêt de l'activité enzymatique de la solution de protéine globine par traitement thermique, et si on le désire, la déshydratation de la solution protéique dans des conditions douces.

2. Procédé selon la revendication 1, qui comprend la réalisation de la dénaturation et de l'oxydation en une étape, sous agitation, en 10-120 minutes, éventuellement avec passage d'air supplémentaire.

3. Procédé selon la revendication 1, qui comprend l'utilisation d'enzymes qui coupent de préférence les liaisons histidine, leucine, glycine, phénylalanine ou alanine.

4. Procédé selon la revendication 1, qui comprend la soumission de la solution protéique à une congélation, une lyophilisation ou un séchage par pulvérisation.

5. Composition protéique pour l'industrie alimentaire que l'on peut obtenir selon l'une quelconque des revendications 1 à 4, caractérisée par les données suivantes (par rapport à la substance sèche) :

teneur minimale en protéines : 80 %

teneur maximale en hémine : 1,2 mg d'hémine/g ;

teneur maximale en amino-acides libres : 20 % ;

de la teneur totale en amino-acides : teneur en lysine : au moins 7 % ; teneur en méthionine : au moins 0,8 % ; teneur en acide glutamique : au moins 4,5 % ;

teneur maximale en cendres : 10 %

couleur : (d'après le coefficient de luminosité du système de la CIE) : Y = au moins 27,13 ;

le produit doit être complètement soluble dans l'eau ;

par chauffage (à une température d'environ 100 °C), le produit coagule pour au moins 10 à 15 % ;

capacité de moussage : 400-500 % ;

activité émulsionnante : 50-55 % ;

valeur biologique protéique :

indice de MORUP-OLESEN : au moins 68,7 valeur NPU = au moins 17,1 %